# EUROPEAN PATENT SPECIFICATION

(11) **EP 0 371 547 B1**
(45) Date of publication and mention of the grant of the patent: **02.02.1994**
(21) Application number: 89202957.0
(22) Date of filing: 21.11.1989
(51) Int. Cl.: G01N 21/88, G01N 21/90

(54) **Device for inspecting the inner wall of a body**
Vorrichtung zum Prüfen der Innenwand eines Körpers
Appareil pour contrôler la surface interne d'un corps

(30) Priority: 28.11.1988 NL 8802933
(43) Date of publication of application: 06.06.1990
(73) Proprietor: HEUFT SYSTEMTECHNIK GMBH, D-56659 Burgbrohl (DE)
(72) Inventor: Obdeijn, Marcellines Johannes Jozef, NL-7434 PV Lettele (NL)
(74) Representative: Gritschneder, Martin, Dipl.-Phys.

(56) References cited:
- EP-A- 0 209 077
- EP-A- 0 336 476
- US-A- 3 150 266
- US-A- 3 761 186
- PATENT ABSTRACTS OF JAPAN, vol. 13, no. 27 (P-815)[3375], 20th January 1989 ; & JP-A-63 225 156 (TOYO SEIKAN KAISHA LTD et al.) 20-09-1988 (Cat. A)
- PATENT ABSTRACTS OF JAPAN, vol. 11, no. 264 (P-610)[2711], 27th August 1987 ; & JP-A-62 69 154 (HAJIME SANGYO K.K.) 30-03-1987

## Description

The invention relates to a device for inspecting the inner surface of a hollow body having a cylindrical standing wall and a bottom, said device comprising:
positioning means for placing said body at a chosen position;
a light source placed relative to said positioning means such that it can illuminate said inner surface; and
inspection means, e.g. a video camera, placed relative to said positioning means such that it can view said inner surface;
whereby the direction of lighting and the direction of inspection of each portion of the said inner surface at least approximately coincide. Thus, the direction of illumination and the direction of viewing each portion of said inner surface are substantially coincident.

Such a device is known from US-A-3 150 266. According to this prior art reference a probe is inserted in a container to be inspected. By means of a periscope-like structure it is possible to determine at one axial level of the container a crack polution or other irregularity. By means of e.g. a helix-shaped scanning operation or the like the full inner surface of the container can be inspected.

It is a purpose of the invention to provide a device having a much easier structure and allowing the inspection of the inner surface of a container.

To this end the device according to the invention is characterized by a mirror having a generally frusto-conical shape and being disposed in both the path of the light beam directed from said light source to said standing inner surface and the path of the light beam directed from said standing inner surface (11) to said inspection means;
the arrangement being such, that the light source, via said frusto-conical mirror, is adapted to illuminate the whole standing inner surface, and the inspection means, via said frusto-conical mirror, are adapted to view the whole standing inner surface;
said light source, said inspection means, and said generally frusto-conical mirror being disposed distant from the hollow body.

It should be noted that from EP-A-0 209 077 an apparatus is known that is adapted for detecting defects on a bottle mouth having a screw thread. In this prior art reference the use of a frusto-conical mirror is suggested.

By making use of a generally frusto-conical mirror having a curved shape a still further effective enlargement can be achieved.

In a specific embodyment the device is characterized in that that the light source 4 is substantially annular and is disposed around the inspection means (1). In this connection it should be noted that from the Patent Abstracts of Japan, vol. 11, no. 264, P-610, a defect inspection instrument for the mouth of a bottle is known, in which use is made of an annular light source disposed around a photoelectric conversion sensor.

The invention will now be elucidated with reference to several embodiments. In the drawing:
figure 1 shows a schematically represented first embodiment;
figure 2 shows a schematic video image obtained with the disposition according to figure 1;
figure 3 shows another embodiment.

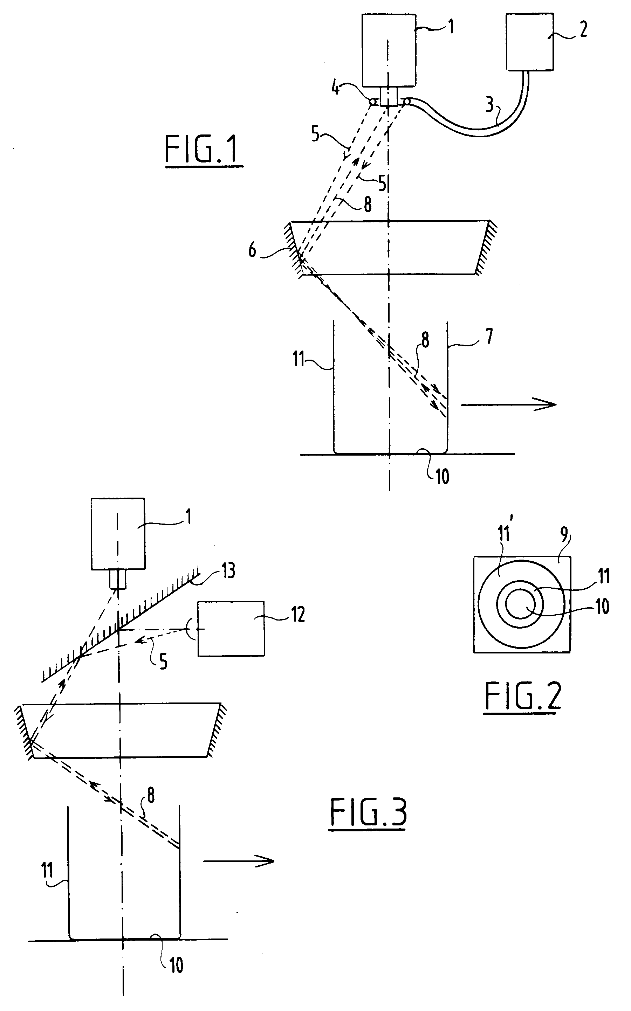

Figure 1 shows a video camera 1 and a light source 2 which gives off light by means of an optical conductor 3 via an end crown 4 of the light conductors. The light 5 coming from these light conductors 4 is radiated into a container 7 via a conical mirror 6. The light 8 coming from the lighted zone can be observed from approximately the same direction by the video camera 1. The drawn rays 5, 8 indicate one lighting and inspection zone only by way of example.

Figure 2 shows a video image 9. The video camera 1 "sees" the bottom of the can directly, as well as the standing inner wall 11. The video camera 1 further inspects the inner wall 11 via the conical mirror 6. This image zone is designated in figure 2 by 11′. It will be apparent that the use of the conical mirror 6 achieves as it were an optical enlargement of the standing wall whereby the resolving power of the optical system is better utilized. This is to the benefit of the detection sensitivity.

By making use of a curved mirror instead of the conical mirror 6 a still further effective enlargement can be achieved.

Figure 3 shows a disposition wherein a light source 12 lights the inner surface 11 of the can 7 via a semi-transparent mirror 13. The light source 12 is placed in relation to the video camera 1 and the semi-transparent mirror 13 such that the optical centre point of the lens system of the camera 1 coincides with the effective location of the light source of the lamp 12.

## Claims

1. A device for inspecting the inner surface (10, 11) of a hollow body (7) having a cylindrical standing wall (11) and a bottom (10), said device comprising:
positioning means for placing said body (7) at a chosen position;
a light source (2, 3, 4) placed relative to said positioning means such that it can illuminate said inner surface (10, 11); and
inspection means (1), e.g. a video camera, placed relative to said positioning means such that it can view said inner surface (10, 11);
whereby the direction of lighting and the direction of inspection of each portion of the said inner surface (10, 11) at least approximately coincide;
**characterized by**
a mirror (6) having a generally frusto-conical shape and being disposed in both the path of the light beam (5) directed from said light source (2, 3, 4) to said standing inner surface (11) and the path of the light beam (8) directed from said standing inner surface (11) to said inspection means (1);
the arrangement being such, that the light source (2, 3, 4), via said frusto-conical mirror (6), is adapted to illuminate the whole standing inner surface (11), and the inspection means (1), via said frusto-conical mirror (6), are adapted to view the whole standing inner surface (11);
said light source (2, 3, 4), said inspection means (1), and said generally frusto-conical mirror (6) being disposed distant from the hollow body (7).

2. The device according to claim 1, characterized in that the generally frusto-conical mirror (6) has a curved shape.

3. The device according to claim 1, characterized in that the light source 4 is substantially annular and is disposed around the inspection means (1).

4. The device according to claim 1, characterized in that a semi-transparent mirror (13) is disposed such that the (virtual) image of the light source (12) substantially coincides with the inspection means (1).

## Patentansprüche

1. Vorrichtung zum Inspizieren der Innenwand (10, 11) eines hohlen Körpers (7) mit einer zylindrischen stehenden Wand (11) und einem Boden (10), mit
einer Positionierungseinrichtung zum Anordnen des Körpers (7) an einer ausgewählten Position;
einer Lichtquelle (2, 3, 4), die gegenüber der Positionierungseinrichtung so angeordnet ist, daß sie die Innenwand (10, 11) beleuchten kann, und
einer Inspektionseinrichtung (1), z.B. eine Video-Kamera, die gegenüber der Positionseinrichtung so angeordnet ist, daß sie die Innenwand (10, 11) sehen kann, wodurch die Richtung der Beleuchtung und die Richtung der Inspektion jedes Bereichs der Innenwand (10, 11) wenigstens näherungsweise zusammenfallen;
gekennzeichnet durch
einen insgesamt kegelstumpfförmigen Spiegel (6), der sowohl auf dem Weg des Lichtstrahls (5), der von der Lichtquelle (2, 3, 4) zu der stehenden Innenwand (11) gerichtet ist, als auch auf dem Weg des Lichtstrahls (8), der von der stehenden Innenwand (11) zu der Inspektionseinrichtung (1) gerichtet ist, angeordnet ist;
wobei die Anordnung so getroffen ist, daß die Lichtquelle (2, 3, 4) über den kegelstumpfförmigen Spiegel (6) die gesamte stehende Innenwand (11) beleuchten kann und die Inspektionseinrichtung (1) über den kegelstumpfförmigen Spiegel (6) die gesamte stehende Innenwand (11) sehen kann;
wobei die Lichtquelle (2, 3, 4) die Inspektionseinrichtung (1) und der insgesamt kegelstumpfförmigen Spiegel (6) im Abstand zu dem hohlen Körper (7) angeordnet sind.

2. Vorrichtung nach Anspruch 1, dadurch gekennzeichnet, daß der insgesamt kegelstumpfförmige Spiegel (6) eine gekrümmte Form hat.

3. Vorrichtung nach Anspruch 1, dadurch gekennzeichnet, daß die Lichtquelle 4 im wesentlichen ringförmig ist und um die Inspektionseinrichtung (1) angeordnet ist.

4. Vorrichtung nach Anspruch 1, dadurch gekennzeichnet, daß ein halbdurchlässiger Spiegel (13) so angeordnet ist, daß das (virtuelle) Bild der Lichtquelle (12) im wesentlichen mit der Inspektionseinrichtung (1) zusammenfällt.

## Revendications

1. Dispositif pour inspecter la surface interne (10,11) d'un corps creux (7) ayant une paroi cylindrique montante (11) et un fond (10), ledit dispositif comprenant :
des moyens de positionnement pour placer ledit corps (7) à une position choisie ;
une source de lumière (2,3,4) placée par rapport auxdits moyens de positionnement de sorte qu'elle peut éclairer ladite surface interne (10,11) ; et
des moyens d'inspection (1), par exemple une caméra-vidéo, placés par rapport auxdits moyens de positionnement de sorte qu'ils peuvent voir ladite surface interne (10,11) ;
la direction d'éclairage et la direction d'inspection de chaque portion de ladite surface interne (10,11) coïncidant au moins approximativement ;
caractérisé en ce qu'il comprend
un miroir (6) sensiblement tronconique et disposé à la fois sur le chemin du faisceau lumineux (5) dirigé de ladite source de lumière (2,3,4) vers ladite surface internemontante (11) et sur le chemin du faisceau lumineux (8) dirigé de ladite surface interne montante (11) vers lesdits moyens d'inspection (1) ;
l'agencement étant tel que la source de lumière (2,3,4), par l'intermédiaire dudit miroir tronconique (6), peut éclairer toute la surface interne montante (11) et que les moyens d'inspection (1), par l'intermédiaire dudit miroir tronconique (6), peuvent voir toute la surface interne montante (11) ;
ladite source de lumière (2,3,4),lesdits moyens d'inspection (1) et ledit miroir sensiblement tronconique (6) étant placés à distance du corps creux (7).

2. Dispositif suivant la revendication 1, caractérisé en ce que le miroir sensiblement tronconique (6) a une forme courbe.

3. Dispositif suivant la revendication 1, caractérisé en ce que la source de lumière (4) est sensiblement annulaire et est disposée autour des moyens d'inspection (1).

4. Dispositif suivant la revendication 1, caractérisé en ce qu'un miroir semi-transparent (13) est disposé de sorte que l'image (virtuelle) de la source de lumière (12) coïncide sensiblement avec les moyens d'inspection (1).
